# EUROPEAN PATENT SPECIFICATION

(11) **EP 3 372 778 B1**
(45) Date of publication and mention of the grant of the patent: **28.02.2024**
(21) Application number: 18160134.5
(22) Date of filing: 06.03.2018
(51) Int. Cl.: E21B 7/02, E21B 15/04, B62D 55/084

(54) **MULTIFUNCTIONAL ARTICULATED DRILLING MACHINE WITH IMPROVED STABILITY**
GELENKIGE MULTIFUNKTIONELLE BOHRMASCHINE MIT VERBESSERTER STABILITÄT
MACHINE DE FORAGE ARTICULÉE MULTIFONCTIONNELLE À STABILITÉ AMÉLIORÉE

(30) Priority: 08.03.2017 IT 201700025663
(43) Date of publication of application: 12.09.2018
(73) Proprietor: Comacchio S.r.l., 31039 Riese Pio X (Treviso) (IT)
(72) Inventor: Comacchio, Renzo, 31039 RIESE PIO X (TV) (IT); Comacchio, Pasqualino, 31039 RIESE PIO X (TV) (IT); Comacchio, Patrizio, 31039 RIESE PIO X (TV) (IT)
(74) Representative: Vinci, Marcello

(56) References cited:
- EP-A1- 0 705 944
- EP-A1- 0 872 409
- EP-A1- 1 475 511
- EP-A1- 2 428 636
- CN-U- 201 943 578

## Description

The present invention relates to drilling rigs and especially concerns a new multifunctional articulated drilling machine with improved stability.

The prior art comprises self-propelled drilling machines that is, a vehicle on which the working members are mounted.

Drilling machines comprising a vehicle equipped with a frame, a self-propelled chassis, and a drilling member are known in the prior art. Said drilling member is supported by a device generally consisting of:
- a tilting support which allows the movement of the drilling member on the horizontal plane. Said support may also include a front coupler, placed in a vertical position perpendicular to the support surface having a rotation axis parallel to the running direction of the self-propelled chassis.
- an arm constrained to the tilting support the constraint of which allows it to rotate on the vertical plane thus allowing the drilling height to vary with respect to the support surface.
- a support articulated by means of one or more constraints, which allows the orientation of the drilling member to be varied on one or more planes.

Said well-known assembly enables different types of drilling to be conducted including:
- Drilling in a direction parallel to the forward direction of the self-propelled chassis, covering a semi-circular area.
- Radial drilling and/or drilling perpendicular to the forward direction of the self-propelled chassis.
- Vertical and/or sub-vertical drilling on the front and on the side of the machine.

Therefore, a machine of the type described above substantially allows traditional drilling to be performed in open environments as well as drilling and bolting operations in underground environments.

In particularly restricted environments, the movement and positioning maneuvers of the machine can be extremely complicated and are sometimes limited by the machine's dimensions and/or its movements in order to ensure its stability. Furthermore, if machines are equipped with drilling members having particularly long guides (generally having drill head strokes greater than 7 meters), there may also be limitations on the movements and/or the orientation of the drilling member for the purpose of maintaining the stability of the machine. Given this, it is often necessary to use multiple types of machines and/or less efficient machines to cope with the various types of intervention required.

The prior art also reflects the problem related to excavations carried out with a machine positioned on inclined or bumpy surfaces which sometimes require specific orientations of the drilling member.

It also reflects the fact that some movements and positioning of the drilling members and of the drilling head cause imbalances which could compromise the stability of the drilling machine.

This also occurs in a more marked way according to the type and conformation of the ground on which the drilling machine rests.

EP 2428636 A1 and CN 201943578 U disclose an articulated drilling machine. EP 0705944 A1 relates to an apparatus for adjusting spacing between a pair of caterpillar tracks of a working vehicle.

To obviate the aforesaid drawbacks, a new type of multifunctional articulated drilling machine with improved stability has been designed and constructed.

The invention is set out in the appended set of claims.

The characteristics of the new articulated drilling machine will be better clarified by the following description with reference to the drawings, attached by way of a non-limiting example.
Figure 1 shows a top view of the new machine (M), showing a first movement (A) of the drilling member (3), actuated by means of the tilting support, and especially the rotation movement around a first vertical axis (Z 1). The tracks (61, 62) are shown in a retracted position towards the longitudinal axis of symmetry of the machine (M).
Figure 1a shows a top view of the new machine (M) with the tracks (61, 62) in a expanded configuration.
Figure 2 shows a side view of the machine (M) where the movement (C) of rotation of the arm (2) of the drilling member (3) is shown around a first horizontal axis (Y1), orthogonal to the direction of motion (X) of the machine (M).
Figure 3 shows a side view of the machine (M) where the movement (D) of rotation of the drilling member (3) is shown with respect to the arm (2) around a second horizontal axis (Y2), orthogonal to the direction of motion (X) of the machine (M).
Figure 4 shows a top view of the new machine (M), showing a further movement (E) of the drilling member (3), and especially the rotation around a second vertical axis (Z2).
Figure 5 shows a side view of the machine (M) where the movement (F) of rotation of the drilling member (3) is shown around a third horizontal axis (Y3), orthogonal to the direction of motion (X) of the machine (M). In figure 5 the translation movement (G) of the drilling head (32) on the relative translation guide (31) of the drilling member (3) is also shown.
Figure 6 shows a three-dimensional view of the machine (M) highlighting the movement (H) of the tracks (61, 62) which can increase or reduce their reciprocal distance (63), as needed by simultaneous and opposite translation along a horizontal orthogonal direction (Y) to the direction of motion (X).
Figure 7 shows a side view of the machine (M) where the possible movement (G) of rotation (X1) of the drilling member (3) together with the arm (2) of the drilling member itself is shown.

The new articulated drilling machine (M) is particularly useful for excavations and drilling in tunnels as well as for ordinary drilling in open environments. The new machine (M) comprises a self-propelled motor vehicle (1), in turn comprising a chassis (11) equipped with a pair of tracks (61, 62) arranged substantially next to each other and parallel, for the movement of the machine in a direction (X) generally horizontal or parallel to the ground (T).

The new machine (M) also comprises a drilling member (3), preferably mounted on the front of the vehicle (1), with respect to the direction of movement (X).

Said drilling member (3) in turn comprises a drilling head (32) mounted and translating on a relative guide (31).

Said drilling member (3) is connected to the vehicle (1) by an arm (2), first constraining means (5) of the lower end (2a) of the arm (2) to the vehicle (1), and second constraining means (4) of the guide (31) of the drilling member (3) at the upper end (2b) of said arm (2).

Said arm (2) further comprises one or more oleodynamic cylinders (21, 22), preferably a pair, or means generally suited to control the movements of the arm (2) itself.

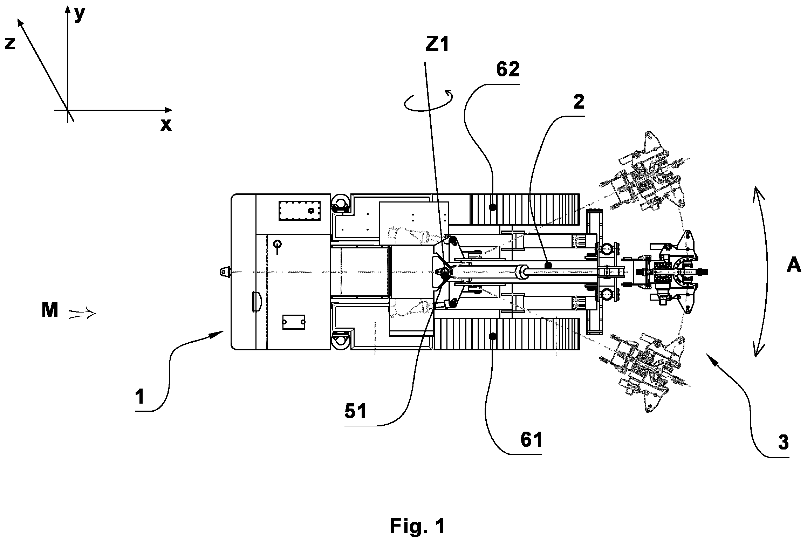

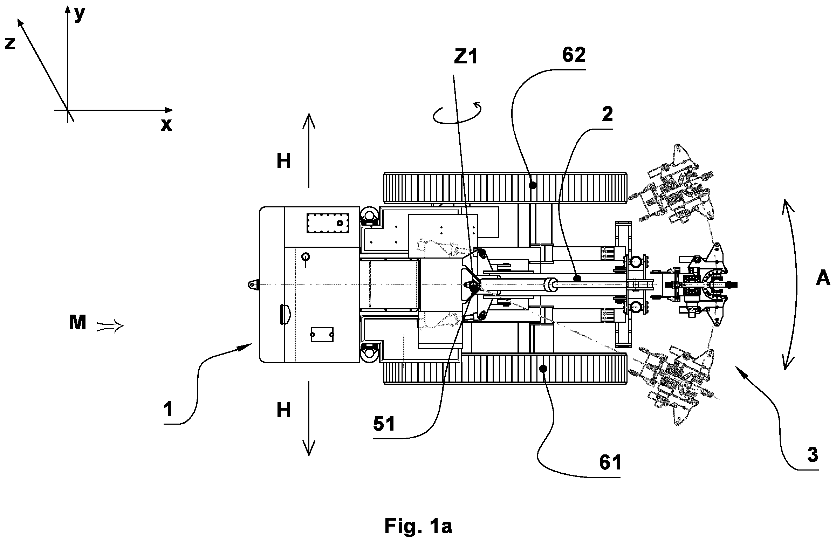

The first constraining means (5) comprises a first pin (51) with a vertical rotation axis (Z1) (Figure 1), suited to rotate the whole arm (2) - drilling member (3) assembly on the vertical axis (Z1).

The rotation movement (A) of the arm (2) - drilling member (3) assembly on the vertical axis (Z1) is shown in Figure 1.

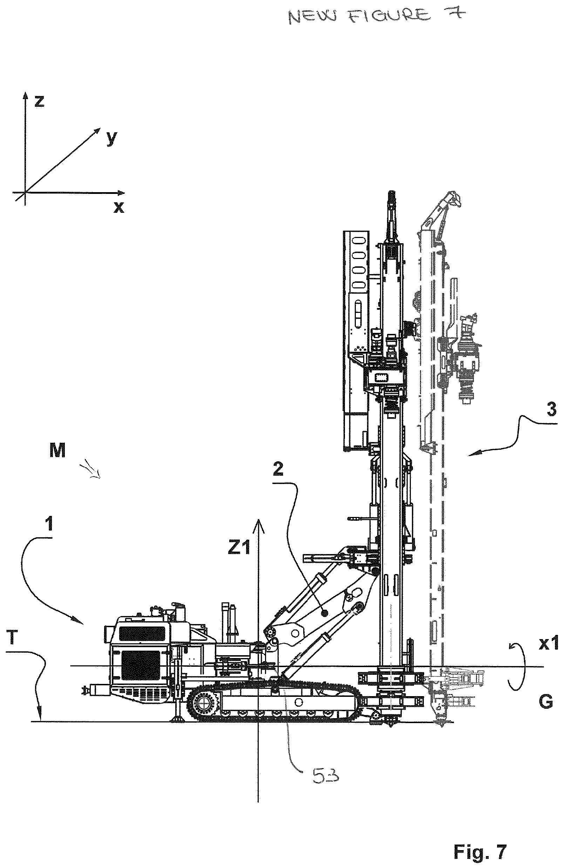

As shown in Figure 7, the first constraining means (5) also includes a front ring bearing (53) constrained to the first pin (51) and rotating on its resting plane with a horizontal rotation axis (X1) orthogonal to the vertical rotation axis (Z1) of the pin (51).

The rotation of said front ring bearing (53) is preferably controlled by means of a gear box connected thereto, which causes its controlled rotation about its axis (X1). Said front ring bearing (53) can rotate at an angle comprised at least between +90° and -90° with respect to the vertical direction (Z), thus being able to orientate the arm (2) - drilling member (3) assembly in any direction on the vertical half-plane orthogonal to the direction of motion (X) of the machine, that is, on the resting plane of the front ring bearing (53).

The movement (G) due to the rotation of the front ring bearing (53) is shown in Figure 7.

The first constraining means (5) also comprises a first hinge (52) directly or indirectly constrained to the front ring bearing (53), with a horizontal rotation axis (Y1) and orthogonal to the vertical axis (Z1) of the pin (51) or parallel to the resting plane of the front ring bearing (53).

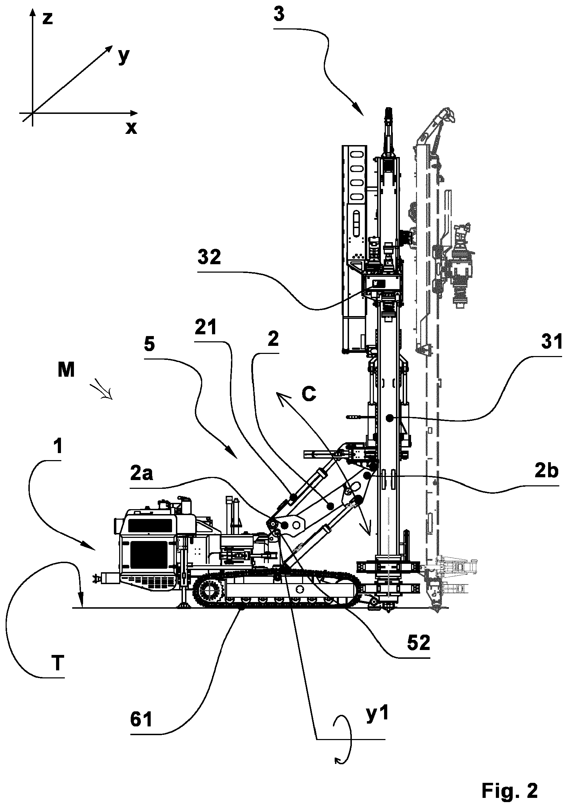

In this way, the hinge (52) varies the inclination of the arm (2), and the relative movement (C) is shown in Figure 2.

The first constraining means (5) of the arm (2) to the vehicle (1) therefore allows the arm (2) - drilling member (3) assembly to be oriented in any direction.

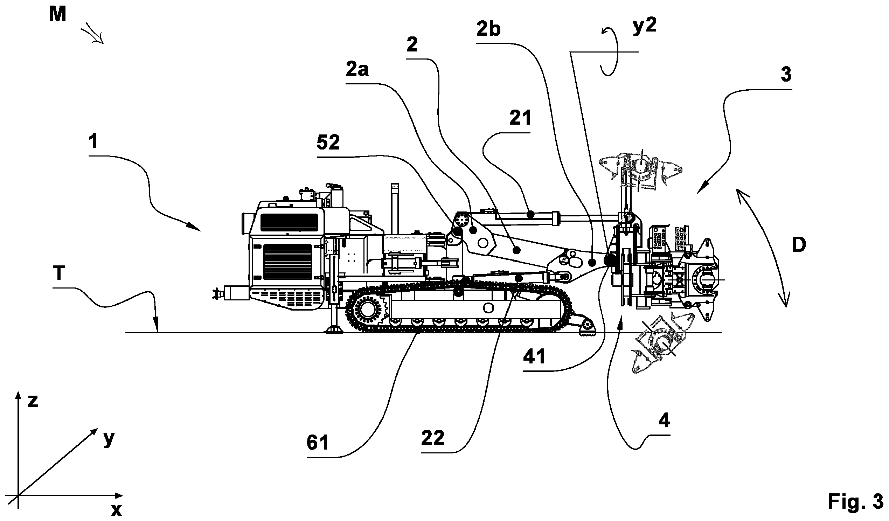

The second constraining means (4) of the guide (31) of the drilling member (3) to the arm (2) comprises a second hinge (41) mounted at the upper end (2b) of the arm (2) (Figure 3). Said second hinge (41) has a rotation axis (Y2) parallel to the axis (Y1) of the first hinge (52) at the opposite end (2a) of the arm (2).

Said second hinge (41) allows the movement (D) of rotation of the drilling member (3) as indicated in Figure 3.

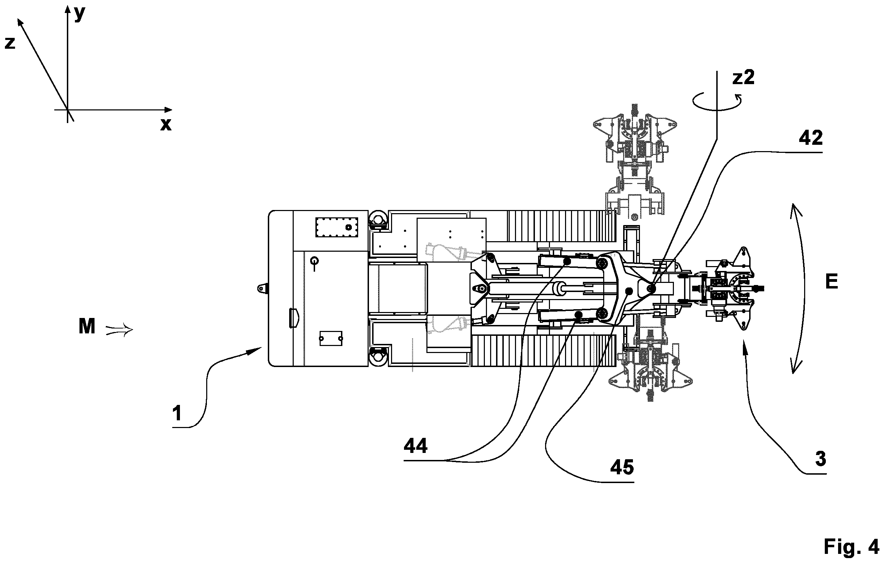

The second constraining means (4) also comprises a second pin (42) connected to the second hinge (41) and having a rotation axis (Z2) orthogonal to the second hinge (41) (Figure 4).

The movement (E) of rotation of the drilling member permitted by the second pin (42) is indicated in Figure 4.

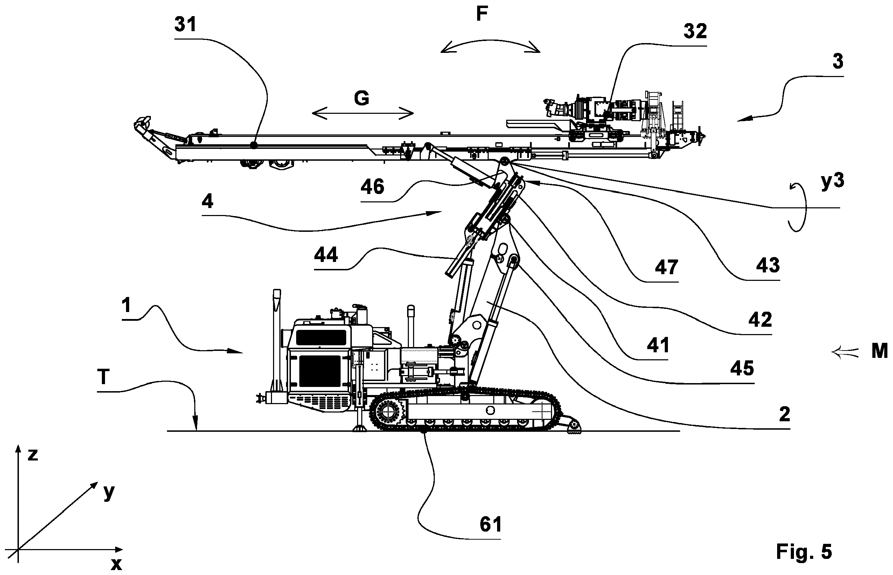

The second constraining means (4) also comprises a third hinge (43) (Figure 5) connected to the second pin (42) and with a rotation axis (Y3) orthogonal to the axis (Z2) of the second pin (42).

The movement (F) of rotation of the drilling member (3) allowed by the third hinge (43) is shown in Figure 5.

The second constraining means (4) of the drilling member (3) to the arm (2) therefore enables the inclination of the head (32) to vary with respect to a vertical plane and to rotate it around the axis (Z2) of the second pin (42).

The second constraining means (4) is for example and preferably of the type described in patent EP1696100 of Comacchio International S.A. That is, it comprises a rotatable support for inclinable masts, comprising a connecting element (45) hinged to the arm (2), a coupling element (46) constrained to the drilling member (3) and hinged to the connecting element (45) by means of a pair of superimposed hinges (47) having the same rotation axis (Z2), a pair of pistons or actuators (44), each of which is hinged to the connecting element (45) and to the coupling element (46), suited to rotate the coupling element (46), and where the superimposed hinges (47) are spaced apart from each other to allow the piston (44) to pass as it elongates in order to rotate the coupling element (46) and consequently the drilling member (3), around the axis (Z2).

To ensure the stability of the machine according to the conditions of the ground on which the machine rests and depending on the type of work and movements to be performed, it is possible to vary the distance (63) between the tracks (61, 62) of the chassis (11).

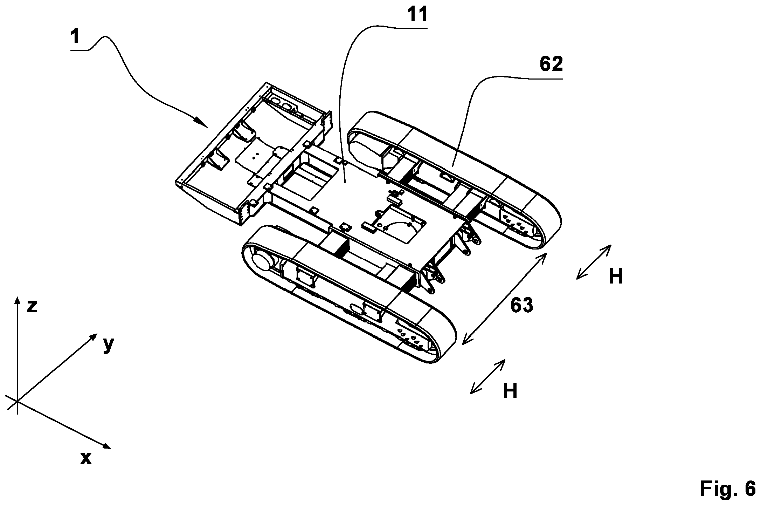

Specifically, the tracks (61, 62) can move apart or toward each other, thus increasing or reducing the distance (63) between them, translating in a direction (Y) substantially orthogonal to the direction of motion (X). The movement (H) performed by the tracks (61, 62) is shown in Figure 6.

The translation of each track (61, 62) is suitably equal and opposite to that of the counterposed track (62, 61), with respect to the longitudinal axis of the machine (M), in such a way as to maintain the symmetry of the chassis (11).

Therefore, with reference to the preceding description and the attached drawings the following claims are made.

## Claims

1. Multifunctional articulated drilling machine (M) comprising a self-propelled motor vehicle (1), with a chassis (11) equipped with a pair of tracks (61, 62) for the forward movement of the machine in an advance direction (X), and a drilling member (3) in turn comprising a drilling head (32) mounted and translating (G) on a respective guide (31), said articulated drilling machine (M) also comprising:
• an arm (2) designed to connect said drilling member (3) to said vehicle (1);
• first constraining means (5) suited to constrain a lower end (2a) of said arm (2) to said vehicle (1), said first constraining means (5) in turn comprising:
- a first pin (51) with a first vertical axis of rotation (Z1), suited to enable a rotating movement (A) of the whole arm (2) and - drilling member (3) around said first vertical axis (Z1);
- a front ring bearing (53) constrained to said first pin (51);
- a first hinge (52) directly or indirectly connected to said front ring bearing (53), said lower end (2a) of said arm (2) being is hinged to said first hinge (52), said first hinge (52) being suited to allow a rotating movement (C) of said arm (2) and drilling member (3) around a first horizontal axis (Y1) which is orthogonal to the advance direction of the machine;
• second constraining means (4) suited to constrain the guide (31) of the drilling member (3) at an upper end (2b) of said arm (2), and wherein said second constraining means (4) in turn comprise:
- a second hinge (41) mounted at the upper end (2b) of the arm (2) and suited to enable a rotating movement (D) of said guide (31) around a second horizontal axis (Y2) which is parallel to the first horizontal axis (Y1) of said first hinge (52) at the lower end (2a) of the arm (2);
- a second pin (42) connected to said second hinge (41) and suited to enable a rotating movement (E) of said guide (31) around a second vertical rotation axis (Z2) which is orthogonal to said second horizontal axis (Y2) of said second hinge (41);
- a third hinge (43) connected to said second pin (42) and suited to enable a rotating movement (F) of said guide (31) around a third horizontal axis (Y3) which is orthogonal to the advance direction of the machine (M) and which is orthogonal to the second vertical axis (Z2) of said second pin (42),
wherein said tracks (61, 62) of said chassis (11) selectively translate in a horizontal direction (Y) which is substantially orthogonal to the advance direction (X) and in the opposite direction, in such a way as to increase or reduce the distance (63) between them, in a symmetric or asymmetric manner with respect to the longitudinal axis of symmetry of the machine (M),
and wherein said front ring bearing (53) is rotating on the plane on which it lies, the front ring bearing (53) rotating around a horizontal rotation axis (X1) which is orthogonal to said first vertical rotation axis (Z1) of the first pin (51) and orthogonal to the first horizontal axis (Y1) of the first hinge (52), the front ring bearing (53) being suited to allow the rotary movement (B) of said arm (2) - and drilling member (3) around said horizontal axis (X1), wherein said front ring bearing (53) can rotate by an angle included at least between +90° and -90° with respect to the vertical direction (Z).

2. Drilling machine according to claim 1, wherein the translation of each track (61) is substantially opposite and equal to that of the opposite track (62) with respect to the longitudinal axis of symmetry of the machine (M).

3. Drilling machine according to claim 1, wherein said articulated drilling machine (M) also comprises at least one control or safety system that:
- indicates the most suitable position for said tracks (61, 62) according to data regarding the position and movement of the machine (M) itself and of said drilling member (3);
- authorizes or prevents the movement of said drilling member (3) according to data regarding the position of said tracks (61, 62) and to data regarding the position and movement of the machine (M) itself and of said drilling member (3).

4. Articulated drilling machine (M) according to claim 1, wherein said arm (2) can be oriented in any direction on a vertical half plane which is orthogonal to the direction of advance (X) of the machine through said first constraining means (5) suited to constrain the lower end (2a) of said arm (2) to said vehicle (1), and wherein said half plane can be rotated on the first vertical axis (Z 1) of said first pin (51) and inclined by means of said first hinge (52).

5. Articulated drilling machine (M) according to the preceding claims, wherein said second constraining means comprise a connection element (45) hinged to said arm (2), a coupling element (46) constrained to the drilling member (3) and hinged to said connection element (45) through one pair of superimposed hinges (47) having the same rotation axis, said same rotation axis being the second vertical axis (Z2), one pair of pistons or actuators (44), each one of which is hinged to said connection element (45) and to said coupling element (46) and is suited to rotate said coupling element (46), and wherein said superimposed hinges (47) are spaced from each other in order to allow the passage of the piston (44) during its extension, in order to allow said coupling element (46) and consequently said drilling member (3) to be rotated around said second vertical axis (Z2).

6. Articulated drilling machine (M) according to claim 4 or claim 5, when claim 5 is dependent on claim 4, said drilling head (32) can be inclined with respect to said vertical half plane and rotated around the second vertical axis (Z2) of said second pin (42) through said second constraining means (4) suited to constrain said drilling member (3) to said arm (2).

7. Articulated drilling machine (M) according to the preceding claims, wherein said drilling member (3) is mounted on the front part (14) of said vehicle (1) with respect to the direction of advance (X).

8. Articulated drilling machine (M) according to the preceding claims, wherein said arm (2) comprises one or more hydraulic cylinders (21, 22) or means in general suited to control the movements of said arm (2) itself.

## Patentansprüche

1. Multifunktionale Gelenkbohrmaschine (M), umfassend ein selbstfahrendes Kraftfahrzeug (1) mit einem Fahrgestell (11), das mit einem Paar Ketten (61, 62) für die Vorwärtsbewegung der Maschine in einer Vorschubrichtung (X) ausgestattet ist, und ein Bohrteil (3), das wiederum einen Bohrkopf (32) umfasst, der auf einer entsprechenden Führung (31) angebracht ist und sich darauf verschiebt (G), wobei die besagte Gelenkbohrmaschine (M) auch Folgendes umfasst:
• einen Arm (2), der dazu ausgelegt ist, das besagte Bohrteil (3) mit dem besagten Fahrzeug (1) zu verbinden;
• erste Rückhaltemittel (5), die dazu geeignet sind, ein unteres Ende (2a) des besagten Arms (2) am besagten Fahrzeug (1) zurückzuhalten, wobei die besagten ersten Rückhaltemittel (5) wiederum Folgendes umfassen:
- einen ersten Stift (51) mit einer ersten vertikalen Drehachse (Z1), der dazu geeignet ist, eine Drehbewegung (A) des gesamten Arms (2) und des Bohrteils (3) um die besagte erste vertikale Achse (Z1) zu ermöglichen;
- ein vorderes Ringlager (53), das am besagten ersten Stift (51) zurückgehalten wird;
- ein erstes Scharnier (52), das direkt oder indirekt mit dem besagten vorderen Ringlager (53) verbunden ist, wobei das besagte untere Ende (2a) des besagten Arms (2) am besagten ersten Scharnier (52) angelenkt ist, wobei das besagte erste Scharnier (52) dazu geeignet ist, eine Drehbewegung (C) des besagten Arms (2) und des besagten Bohrteils (3) um eine erste horizontale Achse (Y1), die orthogonal zur Vorschubrichtung der Maschine ist, zu ermöglichen;
• zweite Rückhaltemittel (4), die dazu geeignet sind, die Führung (31) des Bohrteils (3) an einem oberen Ende (2b) des besagten Arms (2) zurückzuhalten, und wobei die besagten zweiten Rückhaltemittel (4) wiederum Folgendes umfassen:
- ein zweites Scharnier (41), das am oberen Ende (2b) des Arms (2) angebracht und dazu geeignet ist, eine Drehbewegung (D) der besagten Führung (31) um eine zweite horizontale Achse (Y2), die parallel zur ersten horizontalen Achse (Y1) des besagten ersten Scharniers (52) am unteren Ende (2a) des Arms (2) ist, zu ermöglichen;
- einen zweiten Stift (42), der mit dem besagten zweiten Scharnier (41) verbunden und dazu geeignet ist, eine Drehbewegung (E) der besagten Führung (31) um eine zweite vertikale Drehachse (Z2), die orthogonal zur besagten zweiten horizontalen Achse (Y2) des besagten zweiten Scharniers (41) ist, zu ermöglichen;
- ein drittes Scharnier (43), das mit dem besagten zweiten Stift (42) verbunden und dazu geeignet ist, eine Drehbewegung (F) der besagten Führung (31) um eine dritte horizontale Achse (Y3), die orthogonal zur Vorschubrichtung der Maschine (M) und orthogonal zur zweiten vertikalen Achse (Z2) des besagten zweiten Stifts (42) ist, zu ermöglichen,
wobei sich die besagten Ketten (61, 62) des besagten Fahrgestells (11) selektiv in einer horizontalen Richtung (Y), die im Wesentlichen orthogonal zur Vorschubrichtung (X) ist, und in der entgegengesetzten Richtung so verschieben, dass der Abstand (63) dazwischen in Bezug auf die Längssymmetrieachse der Maschine (M) symmetrisch oder asymmetrisch vergrößert oder verkleinert wird,
und wobei sich das besagte vordere Ringlager (53) auf der Ebene, auf der es liegt, dreht, wobei sich das vordere Ringlager (53) um eine horizontale Drehachse (X1) dreht, die orthogonal zur besagten ersten vertikalen Drehachse (Z1) des ersten Stifts (51) und orthogonal zur ersten horizontalen Achse (Y1) des ersten Scharniers (52) ist, wobei das vordere Ringlager (53) dazu geeignet ist, die Drehbewegung (B) des besagten Arms (2) und des besagten Bohrteils (3) um die besagte horizontale Achse (X1) zu ermöglichen, wobei sich das besagte vordere Ringlager (53) mit einem Winkel drehen kann, der mindestens zwischen +90° und -90° in Bezug auf die vertikale Richtung (Z) eingeschlossen ist.

2. Bohrmaschine nach Patentanspruch 1, wobei die Verschiebung jeder Kette (61) im Wesentlichen entgegengesetzt und gleich derjenigen der entgegengesetzten Kette (62) in Bezug auf die Längssymmetrieachse der Maschine (M) ist.

3. Bohrmaschine nach Patentanspruch 1, wobei die besagte Gelenkbohrmaschine (M) auch mindestens ein Steuerungs- oder Sicherheitssystem umfasst, das:
- die am besten geeignete Position für die besagten Ketten (61, 62) gemäß Daten bezüglich der Position und Bewegung der Maschine (M) selbst und des besagten Bohrteils (3) angibt;
- die Bewegung des besagten Bohrteils (3) gemäß Daten bezüglich der Position der besagten Ketten (61, 62) und Daten bezüglich der Position und Bewegung der Maschine (M) selbst und des besagten Bohrteils (3) erlaubt oder verhindert.

4. Gelenkbohrmaschine (M) nach Patentanspruch 1, wobei der besagte Arm (2) in eine beliebige Richtung auf einer vertikalen Halbebene, die orthogonal zur Vorschubrichtung (X) der Maschine ist, durch die besagten ersten Rückhaltemittel (5) ausgerichtet werden kann, die dazu geeignet sind, das untere Ende (2a) des besagten Arms (2) am besagten Fahrzeug (1) zurückzuhalten, und wobei die besagte Halbebene auf der ersten vertikalen Achse (Z1) des besagten ersten Stifts (51) gedreht und mittels des besagten ersten Scharniers (52) geneigt werden kann.

5. Gelenkbohrmaschine (M) nach den vorhergehenden Patentansprüchen, wobei die besagten zweiten Rückhaltemittel Folgendes umfassen: ein Verbindungselement (45), das am besagten Arm (2) angelenkt ist, ein Kopplungselement (46), das am Bohrteil (3) zurückgehalten wird und am besagten Verbindungselement (45) über ein Paar von übereinander angeordneten Scharnieren (47) an der gleichen Drehachse angelenkt ist, wobei die besagte gleiche Drehachse die zweite vertikale Achse (Z2) ist, ein Paar von Kolben oder Aktuatoren (44), von denen jeder davon am besagten Verbindungselement (45) und am besagten Kopplungselement (46) angelenkt ist und dazu geeignet ist, das besagte Kopplungselement (46) zu drehen, und wobei die besagten übereinander angeordneten Scharniere (47) voneinander beabstandet sind, um den Durchgang des Kolbens (44) während seiner Verlängerung zu ermöglichen, so dass das besagte Kopplungselement (46) und folglich das besagte Bohrteil (3) um die besagte zweite vertikale Achse (Z2) gedreht werden können.

6. Gelenkbohrmaschine (M) nach Patentanspruch 4 oder Patentanspruch 5, wenn Patentanspruch 5 von Patentanspruch 4 abhängig ist, wobei der besagte Bohrkopf (32) in Bezug auf die besagte vertikale Halbebene geneigt und um die zweite vertikale Achse (Z2) des besagten zweiten Stifts (42) durch die besagten zweiten Rückhaltemittel (4) gedreht werden kann, die dazu geeignet sind, das besagte Bohrteil (3) am besagten Arm (2) zurückzuhalten.

7. Gelenkbohrmaschine (M) nach den vorhergehenden Patentansprüchen, wobei das besagte Bohrteil (3) am vorderen Teil (14) des besagten Fahrzeugs (1) in Bezug auf die Vorschubrichtung (X) angebracht ist.

8. Gelenkbohrmaschine (M) nach den vorhergehenden Patentansprüchen, wobei der besagte Arm (2) einen oder mehrere Hydraulikzylinder (21, 22) oder Mittel umfasst, die im Allgemeinen dazu geeignet sind, die Bewegungen des besagten Arms (2) selbst zu steuern.

## Revendications

1. Foreuse articulée multifonctionnelle (M) comprenant un véhicule motorisé autopropulsé (1), avec un châssis (11) équipé d'une paire de chenilles (61, 62) pour le déplacement en avant de la machine dans une direction d'avancement (X), et un élément de forage (3) comprenant à son tour une tête de forage (32) montée et se déplaçant (G) sur un guide correspondant (31), ladite foreuse articulée (M) comprenant également :
• un bras (2) conçu pour relier ledit élément de forage (3) audit véhicule (1) ;
• des premiers moyens de contrainte (5) aptes à contraindre une extrémité inférieure (2a) dudit bras (2) audit véhicule (1), lesdits premiers moyens de contrainte (5) comprenant à leur tour :
- un premier goujon (51) avec un premier axe de rotation vertical (Z1), apte à permettre un mouvement de rotation (A) du bras entier (2) et de l'élément de forage (3) autour dudit premier axe vertical (Z1) ;
- un palier annulaire avant (53) contraint audit premier goujon (51) ;
- une première charnière (52) reliée directement ou indirectement audit palier annulaire avant (53), ladite extrémité inférieure (2a) dudit bras (2) étant articulée à ladite première charnière (52), ladite première charnière (52) étant apte à permettre un mouvement de rotation (C) dudit bras (2) et de l'élément de forage (3) autour d'un premier axe horizontal (Y1) qui est orthogonal à la direction d'avancement de la machine ;
• de deuxièmes moyens de contrainte (4) aptes à contraindre le guide (31) de l'élément de forage (3) à une extrémité supérieure (2b) dudit bras (2), et où lesdits deuxièmes moyens de contrainte (4) comprennent à leur tour :
- une deuxième charnière (41) montée à l'extrémité supérieure (2b) du bras (2) et apte à permettre un mouvement de rotation (D) dudit guide (31) autour d'un deuxième axe horizontal (Y2) qui est parallèle au premier axe horizontal (Y1) de ladite première charnière (52) à l'extrémité inférieure (2a) du bras (2) ;
- un deuxième goujon (42) relié à ladite deuxième charnière (41) et apte à permettre un mouvement de rotation (E) dudit guide (31) autour d'un deuxième axe de rotation vertical (Z2) qui est orthogonal audit deuxième axe horizontal (Y2) de ladite deuxième charnière (41) ;
- une troisième charnière (43) reliée audit deuxième goujon (42) et apte à permettre un mouvement de rotation (F) dudit guide (31) autour d'un troisième axe horizontal (Y3) orthogonal à la direction d'avancement de la machine (M) et orthogonal au deuxième axe vertical (Z2) dudit deuxième goujon (42),
où lesdites chenilles (61, 62) dudit châssis (11) se déplacent sélectivement dans une direction horizontale (Y) qui est substantiellement orthogonale à la direction d'avancement (X) et dans la direction opposée, de manière à augmenter ou à réduire la distance (63) entre elles, de façon symétrique ou asymétrique par rapport à l'axe de symétrie longitudinal de la machine (M),
et où ledit palier annulaire avant (53) tourne sur le plan sur lequel il repose, le palier annulaire avant (53) tournant autour d'un axe de rotation horizontal (X1) qui est orthogonal audit premier axe de rotation vertical (Z1) du premier goujon (51) et orthogonal au premier axe horizontal (Y1) de la première charnière (52), le palier annulaire avant (53) étant adapté pour permettre le mouvement de rotation (B) dudit bras (2) et de l'élément de forage (3) autour dudit axe horizontal (X1), où ledit palier annulaire avant (53) peut tourner d'un angle compris au moins entre +90° et -90° par rapport à la direction verticale (Z).

2. Foreuse selon la revendication 1, où la translation de chaque chenille (61) est substantiellement opposée et égale à celle de la chenille opposée (62) par rapport à l'axe de symétrie longitudinal de la machine (M).

3. Foreuse selon la revendication 1, où ladite foreuse articulée (M) comprend également au moins un système de contrôle ou de sécurité qui :
- indique la position la plus appropriée pour lesdites chenilles (61, 62) en fonction des données relatives à la position et au mouvement de la machine (M) elle-même et dudit élément de forage (3) ;
- autorise ou empêche le déplacement dudit élément de forage (3) en fonction des données relatives à la position desdites chenilles (61,62) et des données relatives à la position et au déplacement de la machine (M) elle-même et dudit élément de forage (3).

4. Foreuse articulée (M) selon la revendication 1, où ledit bras (2) peut être orienté dans n'importe quelle direction sur un demi-plan vertical qui est orthogonal à la direction d'avancement (X) de la machine à travers lesdits premiers moyens de contrainte (5) adaptés pour contraindre l'extrémité inférieure (2a) dudit bras (2) audit véhicule (1), et où ledit demi-plan peut être tourné sur le premier axe vertical (Z1) dudit premier goujon (51) et incliné au moyen de ladite première charnière (52).

5. Foreuse articulée (M) selon les revendications précédentes, où lesdits deuxièmes moyens de contrainte comprennent un élément de connexion (45) articulé audit bras (2), un élément d'accouplement (46) contraint à l'élément de forage (3) et articulé audit élément de connexion (45) par une paire de charnières superposées (47) ayant le même axe de rotation, ledit même axe de rotation étant le deuxième axe vertical (Z2), une paire de pistons ou d'actionneurs (44), chacun desquels est articulé sur ledit élément de connexion (45) et sur ledit élément d'accouplement (46) et est apte à faire tourner ledit élément d'accouplement (46), et où lesdites charnières superposées (47) sont espacées l'une de l'autre afin de permettre le passage du piston (44) lors de son extension, afin de permettre la rotation dudit élément d'accouplement (46) et, par conséquent, dudit élément de forage (3) autour dudit deuxième axe vertical (Z2).

6. Foreuse articulée (M) selon la revendication 4 ou la revendication 5, lorsque la revendication 5 est dépendante de la revendication 4, ladite tête de forage (32) peut être inclinée par rapport audit demi-plan vertical et tournée autour du deuxième axe vertical (Z2) dudit deuxième goujon (42) par l'intermédiaire desdits deuxièmes moyens de contrainte (4) aptes à contraindre ledit élément de forage (3) audit bras (2).

7. Foreuse articulée (M) selon les revendications précédentes, où ledit élément de forage (3) est monté sur la partie avant (14) dudit véhicule (1) par rapport à la direction d'avancement (X).

8. Foreuse articulée (M) selon les revendications précédentes, où ledit bras (2) comprend un ou plusieurs cylindres hydrauliques (21, 22) ou des moyens en général aptes à commander les mouvements dudit bras (2).
